# EUROPÄISCHE PATENTSCHRIFT

(11) **EP 0 625 536 B1**
(45) Veröffentlichungstag und Bekanntmachung des Hinweises auf die Patenterteilung: **18.08.1999**
(21) Anmeldenummer: 94107104.5
(22) Anmeldetag: 06.05.1994
(51) Int. Cl.: C08J 3/00, C08F 20/00, C08F 2/44

(54) **Verfahren zur Herstellung Metall-pigmentierter Kunststoff-Formkörper**
Process for the preparation of metal-pigmented plastic moulded materials
Procédé de préparation d'article à mouler de plastique pigmenté

(30) Priorität: 17.05.1993 DE 4316416
(43) Veröffentlichungstag der Anmeldung: 23.11.1994
(73) Patentinhaber: Röhm GmbH, 64293 Darmstadt (DE)
(72) Erfinder: Ittmann, Günter, D-64823 Gross-Umstadt (DE); Krieg, Manfred, Dr., D-64289 Darmstadt (DE)

(56) Entgegenhaltungen:
- WO-A-80/02687

## Beschreibung

### Gebiet der Erfindung

Die Erfindung betrifft Kunststoff-Formkörper, insbesondere hochgefüllte Gießformlinge mit Metallglanzeffekt an der Ober- und der Unterseite der Formkörper.

### Stand der Technik

Der Stand der Technik umfaßt mannigfältige Formen der Dotierung von Kunststoffharzen mit Fillern, die einen Glanzeffekt (Luster Effect) hervorrufen (vgl. Ullmann's Encyclopedia of Industrial Chemistry, 5th Ed. Vol. A20, pg. 347 - 360, 365 - 369 VCH 1990). Dazu gehören z.B. Metallplättchen, insbesondere Aluminium-, Kupfer-, Zink- und Cu-Zn-Bronze-Plättchen, die als kleine Spiegel wirken und fast das gesamte einfallende Licht reflektieren. In der Praxis haben auch lichtreflektierende Partikel Eingang gefunden, bei denen ein z.B. polymeres Trägermaterial metallisiert, d.h. mit einer stark reflektierenden Schicht von Metallen oder Metalloxiden überzogen ist. Der beobachtete Metalleffekt hängt nicht nur von der Partikelgröße und der Größenverteilung ab sondern auch von der räumlichen Orientierung der Partikel. Da die Dichte der meisten Kunststoffe im Bereich ca. 0,92 g/cm³ (Rohdichte: Polyethylen) bis ca. 1,4 g/cm³ (z.B. Rohdichte Polyacetal: 1,41 g/cm³) liegt (vgl. K. Stoeckhert, Kunststoff-Lexikon, 7. Auflage, S. 125,Carl Hanser 1981) ist im Regelfall bei der Metall-Dotierung von Kunststoffen mit dem Sedimentieren der erheblich schwereren Metallpartikel (Dichte Al: ≤ 2,5 g/cm³) zu rechnen.

### Aufgabe und Lösung

Die oben dargelegten Dichterelationen führen bei der Dotierung von Kunststoffen in der Regel dazu, daß sich die Metallpartikel an der Unterseite der Kunststoff-Formlinge anreichern. Der Metallisierungseffekt kommt - in gewisser Abhängigkeit von der Schichtdicke der Kunststoffe und der Filler-Konzentration - vorwiegend bis ausschließlich an der Unterseite der Objekte zur Wirkung. Man erhält eine im Licht gleißende Oberfläche entsprechend der oberflächennahen Konzentration der reflektierenden Partikel (häufig Plättchen oder Schuppen); bei entsprechend hohem Gehalt an plättchenförmigen metallischen Fillern an der Unterseite Überlappung bis hin zum "Dachziegel"-Arrangement der Plättchen. Es versteht sich, daß die Metalldotierung die Produkte verteuert und daß daher an einer möglichst oekonomischen Ausgestaltung der Dotierungsverfahren ein gesteigertes Interesse besteht. Andererseits sollten an den Materialeigenschaften, insbesondere am Erscheinungsbild der dotierten Objekte keine Abstriche hingenommen werden. Desweiteren lag der vorliegenden Erfindung die Aufgabe zugrunde, hochgefüllte Kunststoff-Materialien zur Verfügung zu stellen, die an **beiden** Oberflächen oberflächennah eine solche Konzentration an reflektierenden Partikeln aufweisen, daß der oben geschilderte Metall-Glanzeffekt auftritt. Unter praktischen und aesthetischen Gesichtspunkten war u.a. ein Effekt anzustreben, der dem des natürlich vorkommenden Glimmers ähnelt.
Es wurde nun gefunden, daß zur Lösung der vorliegenden Aufgabe das erfindungsgemäße Verfahren besonders geeignet ist. Die Erfindung betrifft somit ein Verfahren zur Herstellung von hochgefüllten Kunststoff-Formköpern KFK, insbesondere hochgefüllten Gießformlingen mit Metall-Glanzeffekt an der Ober- und der Unterseite der Formkörper, wobei man das Matrixmaterial MM enthaltend die Vorstufe der Polymeren, aus denen die Formkörper KFK aufgebaut sind und an sich bekannte nichtmetallische Füllstoffe FS einerseits mit an sich bekannten Metallpatikeln MP und andererseits mit metallisierten Kunststoffpartikeln KP, deren Dichte unterhalb der Dichte des das Fillermaterial enthaltenden Matrixmaterials MM liegt, dotiert und in an sich bekannter Weise die Polymerisation und abschließend Entformung durchführt. Es kann als einer der Vorteile des erfindungsgemäßen Verfahrens gelten, daß es sich weitgehend an die Herstellungs- und Dotierungsverfahren für Gießharze des Standes der Technik anlehnen kann.

Das erfindungsgemäße Verfahren richtet sich somit auf metallisch dotierbare Gießharze, wobei Polyester und Acrylharze, speziell Polymethylmethacrylat (PMMA) als Matrixmaterialien MM hervorgehoben seien. (H. Rauch-Puntigam, Th. Völker, Acryl- und Methacrylverbindungen, Springer-Verlag, 1967). Die vorliegende Erfindung sei am Beispiel der Acrylharze, speziell des PMMA näher erläutert. Man geht von den Monomeren oder üblicherweise von einem Sirup als Vorprodukt aus, der vorteilhafterweise ein Praepolymerisat und die Monomeren enthält. Ein typisches Vorprodukt kann beispielsweise 5 - 30 Gew.-Teile PMMA-Praepolymerisat und 70 bis 95 Gew.-Teile Methylmethacrylat sowie 0 bis 5 Gew.-Teile eines bifunktionellen Vernetzers beispielsweise vom Typ der (Meth)acryläsureester mehrwertiger Alkohole enthalten. Außerdem können die Vorprodukte noch in untergeordneten Anteilen, bis etwa 15 Gew.-Teile zweckmäßig ausgewählte Comonomere, z. B. Methylacrylat und Ethylhexyl(meth)acrylat enthalten. Ferner kann es zweckmäßig sein zum Zwecke der Silanisierung von mineralischen Füllstoffen FS ein oder mehrere Silanisierungsmittel Sl-M in Mengen von 0 bis 5 Gew.-Teilen, vorzugsweise 0,5 bis 1,5 Gew.-Teilen zuzusetzen.

Vorzugsweise besitzt das Praepolymerisat eine Molmasse im Bereich 2 x 10⁴ bis 4 x 10⁵ Dalton [Bestimmung durch Size Exclusion Chromatographie (SEC)]. Die Viskosität des Vorprodukts wird zweckmäßig auf 60 bis 200 x 10⁻³ Pa x s (60 bis 200 cP) eingestellt. Die Viskosität des Sirups liegt, solange nur flüssige Bestandteile vorhanden sind, bei 80 bis 180 x 10⁻³ Pa x s (80 bis 180 cP.)
Zweckmäßig liegt die Verarbeitungsviskosität der fertigen Gießharze im Bereich 3.000 bis 30.000 x 10⁻³ Pa x s (3.000 - 30.000 cP.)

Die Metallpartikel MP sind vorzugsweise ausgewählt aus der Gruppe bestehend aus Aluminium, Zink, Kupfer und Bronzen aus diesen Bestandteilen, z. B. Kupfer-Zink-Bronzen. Sie sind in der Regel flächig gestaltet und kommen z. B. in Lamellen-Flocken- bzw. Flitterform in den Handel (vgl. DIN 55 943; 55 944; FSO 4618-1) Besonders bevorzugt sind die Partikel in Flitterform, insbesondere Aluminiumflitter. Die Flitter können quadratisch, hexagonal, rechteckig oder irregulär geschnitten sein.
Die Partikelgröße liegt im allgemeinen im Bereich 30 µm bis 1 mm, vorzugsweise im Bereich 100 µm bis 800 µm in der Vorzugsebene. Im allgemeinen genügt eine verhältnismäßig geringe Dicke der Metallpartikel. Als Anhalt kann gelten, daß das Verhältnis der Partikeldicke zum Partikeldurchmesser im Mittel ca. 0,1 - 0,01 vorzugsweise ca. 0,02 - 0,05 beträgt. Beispielsweise seien als Anhalt für die Dicke 10 pm genannt. Die reflektierenden Metallpartikel MP sind im Handel in verschiedenen Farbtönen erhältlich, beispielsweise in silber, gold, rot und grün. Das spezifische Gewicht der Partikel weicht in der Regel nicht wesentlich von dem in der Literatur angegebenen spezifischen Gewicht der Metalle bzw. Bronzen selbst ab. Aluminiumflitter der oben angegebenen Art haben z. B. ein spezifisches Gewicht von 2,7. Der Anteil der Metallpartikel beträgt in der Regel mindestens 0,1 Gew.-%, vorzugsweise mindestens 0,5 Gew.-% bezogen auf das Matrixmaterial MM. Bei der Bemessung der oberen Grenze kommen oekonomische Überlegungen ins Spiel, d.h. man wird nur soviel Metallpartikel einsetzen, daß das übrige Eigenschaftsprofil beibehalten und der beabsichtigte Metall-Glanzeffekt erreicht wird. Als Anhalt seien z. B. maximal ca. 5 Gew.-% an Metallpartikeln genannt. Im allgemeinen kann ein Bereich von 0,5 - 4 Gew.-%,insbesondere 0,5 - 2 Gew.-% an den Metallpartikeln MP bezogen auf das Matrixmaterial MM als bevorzugter Bereich gelten.

Die metallisierten Kunststoffpartikel KP sind ebenfalls an sich bekannt und z.T. im Handel erhältlich. Ihre Gewichts-anteile bezogen auf das Matrixmaterial MM liegen im gleichen Bereich wie für die Metallpartikel MP angegeben.
Kunststoffpartikel KP auf Polyesterbasis, z. B. in Form von metallisierten Polyesterflittern, hergestellt aus metallisierter Polyesterfolie. Die metallisierten Kunststoffpartikel KP auf Polyesterbasis besitzen beispielsweise ein spezifisches Gewicht von ca. 1,4. Sie können quadratisch, hexagonal, rechteckig oder auch irregulär geformt sein.

Im allgemeinen liegt die Partikelgröße im Bereich 30 µm bis 1 mm, vorzugsweise im Bereich 100 µm bis 800 µm in der Vorzugsebene. Die Dichte liegt in der Regel bei oder oberhalb ca. 10 µm. Als Anhalt kann gelten, daß das Verhältnis der Partikeldicke zum Partikeldurchmesser im Mittel ca. 0,1 bis 0,01 beträgt, vorzugsweise 0,05 bis 0,08. Die Kunststoff-Flitter KP werden außer in den Farben silber und gold auch noch in verschiedenen anderen Farben angeboten, beispielsweise blau, grün. Die Kunststoff-Flitter werden vom Hersteller ggfls. mit einem Einbrennlack beispielsweise auf Epoxidharzbasis beschichtet angeboten. Die Temperaturbeständigkeit derartiger Polyesterflitter ist bis ca. 175 °C gewährleistet.

Als Füllstoffe FS eignen sich die einschlägig für Gießharze verwendeten feinteiligen anorganischen oder organischen Materialien. Zweckmäßig wird eine Korngröße von 200 µm Durchmesser, vorzugsweise 50 µm nicht überschritten. Bei Anwendung von Cristobalit als Filler sollen vorzugsweise mindestens 95 % der Teilchen < 10 µm groß sein. Teilchen mit einer Größe von ≤ 0,1 µm sollen nach Möglichkeit nicht mehr als 10 % der gesamten Teilchenzahl ausmachen. Die Teilchengröße wird gemäß den üblichen Verfahren bestimmt (vgl. B. Scarlett in "Filtration & Separation" pg. 215, 1965). Zur Teilchengrößenbestimmung werden die jeweils größten Abmessungen der Partikel herangezogen. Bevorzugt werden kornförmige Partikel. Gelegentlich kann es vorteilhaft sein, die Partikel durch Erhitzen, etwa auf 150 Grad C, von adsorptiv gebundener Feuchtigkeit zu befreien. Die Füllstoffe FS können Naturprodukte oder synthetisch hergestellt sein. Die mechanischen Eigenschaften wie Härte, elastischer Schermodul bemessen sich nach dem vorgesehenen Anwendungszweck der Gießharze. Dabei kann die Einstellung eines elastischen Schermoduls von wenigstens 5 GNm⁻² vorteilhaft sein. Geeignet sind z.B. Mineralien wie Aluminiumoxide, Aluminiumhydroxide und Derivate, z.B. Alkali- und Erdalkalidoppeloxide und Erdalkalihydroxide, Tone, Siliciumdioxid in seinen verschiedenen Modifikationen, Silikate, Aluminosilikate, Carbonate, Phosphate, Sulfate, Sulfide, Oxide, Kohle, Metalle und Metallegierungen. Ferner sind synthetische Materialien wie Glasmehl, Keramik, Porzellan, Schlacke, feinverteiltes synthetisches SiO₂ geeignet. Genannt seien Kieselsäuremodifikationen wie Quarz (Quarzmehl), Tridymit und Cristobalit, sowie Kaolin, Talcum, Glimmer, Feldspat, Apatit, Baryte, Gips, Kreide, Kalkstein, Dolomit. Gegebenenfalls können auch Gemische von Füllstoffen angewendet werden. Der Füllstoffanteil an den Gießharzen beträgt vorzugsweise mindestens 40 Gew.-%. Im allgemeinen wird ein Anteil von 80 Gew.-% nicht überschritten. Als Richtwert sei ein Füllstoffgehalt der Gießharze von > 50 und bis 80 Gew.-% angegeben. Die Herstellung der Füllstoffe in den zweckmäßigen Korngrößen kann nach den bekannten Verfahren erfolgen, z.B. durch Brechen und Mahlen. Besonders bevorzugt ist Cristobalit neben Aluminiumhydroxid.

Bei einer bevorzugten Ausführungsart liegt die durchschnittliche Teilchengröße im Bereich 60 - 0,5 um. Vorzugsweise liegt die Härte (nach Mohs: vgl. Römpp's Chemie-Lexikon, 9. Auflage, S. 1700, Georg Thieme Verlag 1990) der Füllstoffe FS im Falle des Christobalits bei ≥ 6, im Falle des Aluminiumhydroxids bei 2,5 - 3,5.

Die Silanisierungsmittel SI-M dienen in an sich bekannter Weise als Haftvermittler zwischen Füllstoff und organischer Phase. Es können somit die aus dem Stand der Technik bekannten Organosilicium-Verbindungen eingesetzt werden.
In erster Linie handelt es sich um funktionelle Organosiliciumverbindungen mit mindestens einer ethylenisch ungesättigten Gruppe im Molekül. Der die ethylenisch ungesättigte Gruppe tragende funktionelle Rest ist im allgemeinen über ein C-Atom mit dem zentralen Siliciumatom verknüpft. Die verbleibenden Liganden am Silicium sind in der Regel Alkoxyreste mit 1 bis 6 Kohlenstoffatomen (wobei sich noch Etherbrücken im Alkylrest befinden können). Genannt seien z.B. die Vinyltrialkoxysilane. Die CC-Doppelbindung kann auch über ein oder mehrere Kohlenstoffatome mit dem Si-Atom verbunden sein, z.B. in Form der Allyltrialkoxysilane oder der α-Methacryloyloxypropyltrialkoxysilane. Auch Dialkoxysilane können verwendet werden, wobei am Si-Atom ein weiterer funktioneller Rest mit einer CC-Doppelbindung, meist des gleichen Typs, oder ein Alkylrest mit vorzugsweise 1 bis 6 Kohlenstoffatomen gebunden ist. Es können auch verschiedene Typen von Organosiliciumverbindungen in der Organosilicium-Komponente vorhanden sein. Genannt seien z.B. das Vinyltrimethoxysilan, Vinyltriethoxysilan, Vinyltriacetoxysilan, Vinyltris(methoxyethoxy)silan, Divinyldimethoxysilan, Vinylmethyldimethoxysilan, Vinyltrichlorsilan, α-Methacryloyloxypropyltrimethoxysilan oder α-Methacryloyloxypropyltris(methoxyethoxy)silan. Vorteilhafterweise werden die Organosiliciumverbindungen zusammen mit Katalysatoren vom Amintyp, insbesondere vom Typ der Alkylamine mit 3 bis 6 Kohlenstoffatomen, speziell mit n-Butylamin angewendet. Als Richtwert für die Anwendung des Amin-Katalysators kann 0,5 bis 10 Gew.-%, vorzugsweise 1 bis 5 Gew.-% der Organosiliciumkomponente angenommen werden.
Im allgemeinen beträgt das Gewichtsverhältnis anorganischer Füllstoffe zu Organosiliciumverbindung 500 : 1 bis 20 : 1, vorzugsweise 50 ± 25 : 1.

### Durchführung des Verfahrens

Bei der Herstellung des Gießharzes kann auf die Verfahren des Standes der Technik zurückgegriffen werden. Man gibt beispielsweise Monomer ggfls. mit Anteilen eines bifunktionellen Vernetzers und des Silanisierungsmittels SI-M sowie eines Alkylamins (Anhalt etwa 0,2 Gew.-% bezogen auf das Monomer) in homogener Mischung vor. Man trägt den partikelförmigen Füllstoff, vorzugsweise Cristobalit oder Aluminiumhydroxid mit Hilfe eines Dissolvers ein, wobei die Viskosität zu beobachten ist. Als Anhaltspunkt für das Eintragen sei ca. 1 Stunde genannt.
Man kann nun beispielsweise den Ansatz auf der Rollbank etwa 24 Stunden behandeln und dann Praepolymerisat in den vorgesehenen Mengen zusetzen. Zu der erhaltenen Suspension gibt man den Initiator beispielsweise vom Typ der peroxidischen Verbindungen wie z.B. der Peroxidicarbonsäureester (vgl. Brandrup-Immergut, Polymer Handbook, 3rd. Ed. II-1, J. Wiley 1989; H. Rauch-Puntigam, Th. Völker, Acryl- und Methacrylverbindungen, Springer-Verlag 1967) sowie ggfls. ein Gleitmittel wie z.B. Stearinsäure (Anhalt: ca. 0,1 Gew.-%) und die Metallpartikel MP sowie die metallisierten Kunststoffpartikel KP.
Die hochgefüllten, Metallpartikel MP und metallisierte Kunststoffpartikel KP sowie Initiator enthaltenden Gießharze werden in eine geeignete formgebende Kammer verfüllt mit Schichtdicken im Bereich ca. 2 bis ca. 15 mm und bei erhöhter Temperatur, beispielsweise bei ca. 65 Grad C während eines gewissen Zeitraums im Bereich von ca. 20 Minuten und anschließend bei noch höherer Temperatur, beispielsweise ca. 105 Grad C ca. 1/4 Stunde getempert.
Anschließend wird der Polymerisat-Formkörper aus der Formkammer entnommen.

### Vorteilhafte Wirkungen

Die erfindungsgemäß hergestellten Polymerisat-Formkörper, beispielsweise in Plattenform zeigen auf der "Ober"- und "Unter"-seite ein sehr gleichmäßiges, metallisches Gleißen. Die Metallpartikel MP haben sich größtenteils auf der Unterseite, die metallisierten Kunststoffpartikel KP größtenteils auf der Oberseite des Formkörpers angesammelt. Der Formkörper stellt sich somit beidseitig glänzend dar. Im Zwischengebiet zwischen Ober- und Unterseite befinden sich relativ wenige Metallpartikel MP bzw. Kunststoffpartikel KP. Die sonstigen, insbesondere die mechanischen und die thermischen Eigenschaften der Formkörper werden durch die Dotierung nicht negativ beeinflußt.

Die folgenden Beispiele dienen zur Erläuterung der Erfindung.

### BEISPIELE

### A) Herstellung des Gießharzes

104 g Methylmethacrylat wird mit 2 g Ethylenglykoldimethacrylat und 8 g α-Methacyloyloxypropyltrimethoxysilan unter Zusatz von 0,2 g n-Butylamin vermischt.
Zu diesem Gemisch werden 280 g Cristobalit (Cristobalit T 6000, Korngröße 0,1 - 10 um, Produkt der Fa. Quarzwerke, Köln), portionsweise mit Hilfe eines Dissolvers (UMA-Dissolver, Fa. VMA Getzmann, Verfahrenstechnik Heienbach, 5225 Reichshof) so eingetragen, daß die Viskosität des Gemisches 10 Pa·s nicht übersteigt. Die Dauer des Eintragens liegt bei ca. 1 Stunde, wobei in Intervallen zwischendurch, speziell gegen Ende, die Reaktion ohne Rühren ablaufen gelassen wird.
Der Ansatz wird nun 24 Stunden auf der Rollbank behandelt, dann setzt man 6 g eines Copolymerisats aus Methylmethacrylat und Methylacrylat (90 : 10 Gew.-Teile) mit einem n_{spez/c}-Wert von 100 (Produkt PLEX ^{R} 8 640 der Röhm GmbH) zu. Die Viskosität (nach DIN 53 211), Becherdurchmesser 6 mm) beträgt 24 sec.

Unter Rühren mit einem Flügelrührer werden zu dieser Suspension 0,6 % Bis(4-tert.butylcyclohexyl)peroxidicarbonat und 0,1 Gew.-% Stearinsäure, , 1,5 Gew.-% Aluminiumflitter, einbrennlackiert, ca. 0,4 x 0,4 x 0,011 mm (Artikel Nr. 26/90 silber der Fa. Dragon Werk Gg. Wild/Bayreuth) und 1,5 Gew.-% Polyesterflitter, ca. 0,4 x 0,4 x 0,025 mm (Artikel Nr. 25/90 R silber der Fa. Dragon Werk Gg.Wild/Bayreuth), zugegeben

### B) Herstellung des Polymerisatformkörpers

Man stellt aus zwei hochglanzpolierten, verchromten Messingplatten (als Anhalt 350 x 350 x 4 mm) und einer Dichtschnur, (beispielsweise PVC-Schnur mit 4 mm Durchmesser) eine Form-Kammer her, in welche man das hochgefüllte, gegebenenfalls eingefärbte (entgaste) Gießharz mit beispielsweise PMMA/MMA als härtbarem Kunstharz und mit wenigstens einem die radikalische Polymerisation auslösenden Initiator, beispielsweise einem Perester wie Bis-(4-tert.butylcyclohexyl)peroxydicarbonat in üblichen Mengen (z. B. 0,5 - 5 Gew.-% bezogen auf die Monomeren) und je 1,5 Gew.-% der beiden unterschiedlichen Flittertypen, verfüllt. Nach dem Verschließen der Formkammer wird diese bei Raumtemperatur 20 Minuten waagerecht liegen gelassen und danach wird zunächst bei erhöhter Temperatur - beispielsweise bei ca. 65 °C und im Wasserbad bei waagerechter Lage der Formkammer - während eines Zeitraums von - als Anhalt - 20 Minuten und anschließend bei noch höherer Temperatur, beispielsweise bei 105 °C, vorzugsweise im Trockenschrank 15 Minuten lang getempert. Anschließend wird das Polymerisatformstück bei etwa 60 bis 70 °C aus der Form-Kammer herausgenommen.

### C) Aussehen des Plattenpolymerisates

Das Plattenpolymerisat hat auf der "Ober"- und "Unterseite" einen sehr gleichmäßigen, metallischen Glitzereffekt. Die Aluminiumflitter haben sich größtenteils auf der Unterseite und die Polyesterflitter größtenteils auf der Oberseite des Plattengießlings angesammelt. Der Gießling ist beidseitig glänzend und nicht durchgebogen. Zwischen Ober- und Unterseite befinden sich relativ wenige Flitter.

## Patentansprüche

1. Verfahren zur Herstellung von hochgefüllten Kunststoff-Formkörpern aus an sich bekanntem Polymermaterial mit Metallglanz an der Ober- und der Unterseite der Formkörper mittels einer geeigneten Form,
dadurch gekennzeichnet,
daß man das Matrixmaterial MM enthaltend die Polymer-Vorstufe und an sich bekannte, nichtmetallische Füllstoffe FS einerseits mit an sich bekannten Metallpartikeln MP und metallisierten Kunststoffpartikeln KP, deren Dichte unterhalb der Dichte des das Füllstoffmaterial enthaltenden Matrixmaterials MM liegt, dotiert und in an sich bekannter Weise die Polymerisation und abschließend die Entformung durchführt.

2. Verfahren gemäß Anspruch 1, dadurch gekennzeichnet, daß das Matrixmaterial MM aus Methylmethacrylat aufgebaut ist.

3. Verfahren gemäß den Ansprüchen 1 und 2, dadurch gekennzeichnet, daß die Metallpartikel MP ausgewählt sind aus der Gruppe bestehend aus Aluminium, Kupfer, Zink und Bronzen aus den genannten Metallen.

4. Verfahren gemäß den Ansprüchen 1 - 3, dadurch gekennzeichnet, daß der Anteil der Metallpartikel MP 0,1 bis 5 Gew.-% bezogen auf das Matrixmaterial MM beträgt.

5. Verfahren gemäß den Ansprüchen 1 bis 4, dadurch gekennzeichnet, daß als metallisierte Kunststoffpartikel solche auf Polyesterbasis eingesetzt werden.

6. Verfahren gemäß den Ansprüchen 1 bis 5, dadurch gekennzeichnet, daß der Anteil der metallisierten Kunststoffpartikel KP 0,1 bis 5 Gew.-% bezogen auf das Matrixmaterial MM beträgt.

## Claims

1. Process for preparing highly filled plastics mouldings from polymer material known *per se* with a metal lustre on the top and bottom of the moulding using a suitable mould, characterised in that the matrix material MM containing the polymer precursor and non-metallic fillers FS known *per se*, on the one hand, are doped with metal particles MP known *per se* and metallised plastics particles KP, the density of which is less than the density of the matrix material MM containing the filler, and the polymerisation and finally the unmoulding are carried out in a manner known *per se.*

2. Process according to claim 1, characterised in that the matrix material MM is synthesised from methyl methacrylate.

3. Process according to claims 1 and 2, characterised in that the metal particles MP are selected from the group consisting of aluminium, copper, zinc and bronzes of said metals.

4. Process according to claims 1 - 3, characterised in that the proportion of metal particles MP is from 0.1 to 5 wt.-%, based on the matrix material MM.

5. Process according to claims 1 to 4, characterised in that particles based on polyester are used as the metallised plastics particles.

6. Process according to claims 1 to 5, characterised in that the proportion of metallised plastics particles KP is from 0.1 to 5 wt.-%, based on the matrix material MM.

## Revendications

1. Procédé de fabrication d'articles moulés en matière plastique hautement chargée à partir d'un matériau polymère par lui-même connu avec un brillant de métal au côté supérieur et au côté inférieur de l'article moulé au moyen d'un moule approprié,
caractérisé en ce qu'
on dope le matériau de matrice MM contenant le précurseur de polymère et des charges non métalliques CH par elles-mêmes connues d'une part avec des particules métalliques PM par elles-mêmes connues et des particules de plastique métallisées PPM, dont l'épaisseur est inférieure à l'épaisseur du matériau de matrice mm contenant le matériau de charge, et en ce qu'on réalise de façon connue la polymérisation et enfin le démoulage.

2. Procédé selon la revendication 1,
caractérisé en ce que
le matériau de matrice MM est constitué de méthacrylate de méthyle.

3. Procédé selon les revendications 1 et 2,
caractérisés en ce que
les particules de métal PM sont choisies dans le groupe constitué par l'aluminium, le cuivre, le zinc et les bronzes constitués des métaux mentionnés.

4. Procédé selon les revendications 1-3,
caractérisé en ce que
la proportion des particules métalliques PM s'élève à 0,1 à 5 % en poids par rapport au matériau de la matrice MM.

5. Procédé selon les revendications 1 à 4,
caractérisé en ce qu'
on utilise comme particules de matrice métallisées des particules à base de polyester.

6. Procédé selon les revendications 1 à 5,
caractérisé en ce que
la proportion des particules de plastique métallisé PPM s'élève à 0,1 à 5 % en poids par rapport au matériau de la matrice MM.
